# EUROPEAN PATENT APPLICATION

(11) **EP 4 851 936 A1**
(43) Date of publication of application: **09.12.2026**
(21) Application number: 25300081.4
(22) Date of filing: 06.06.2025
(51) Int. Cl.: G06T 15/00, G06T 7/00

(54) **IMAGE TOKENIZATION FOR VISION TRANSFORMERS**

(71) Applicant: Sony Interactive Entertainment Inc., Tokyo 108-0075 (JP)
(72) Inventor: TREDER, Matthias, Tokyo, 108-0075 (JP); LECHAT, Alexis, Tokyo, 108-0075 (JP); MAKRIDIS, Pavlos, Tokyo, 108-0075 (JP); TORANO, Jesus Alejandro Zarzar, Tokyo, 108-0075 (JP)
(74) Representative: Fish & Richardson P.C.

(57) **Abstract**

Methods, systems, and apparatus for obtaining, by one or more processors, a rendered image frame including a plurality of pixels and a set of geometric data stored in a buffer, the set of geometric data including geometric data associated with the plurality of pixels in the rendered image frame; identifying, by one or more processors, a plurality of patches in the rendered image frame, each patch of the plurality of patches including pixels from the plurality of pixels and corresponding to a primitive identified in the set of geometric data; generating, by one or more processors, a plurality of tokens associated with the plurality of patches based on a set of feature vectors of pixels in each patch; and generating, by one or more processors, a processed rendered image frame based on at least one of the plurality of tokens provided to a transformer.

## Description

### TECHNICAL FIELD

This specification relates generally to real-time rendering of digital images and more particularly to post-processing of rendered digital images.

### BACKGROUND

Real-time rendering includes the rapid generation of digital images (referred to as images herein). For example, real-time rendering can be used to generate images as frames of videos at frame rates of 30 frames per second (FPS), 60 FPS, or higher. For certain use cases, such as video games, virtual reality (VR), simulations and the like, graphics are required to be rendered rapidly (e.g., ≥ 60 FPS), such as in response to user input. The goal of real-time rendering is to produce photorealistic images at high speed. However, real-time rendering often balances visual quality with computational performance in terms of being achievable under realistic hardware constraints (e.g., processors and memory available in consumer gaming consoles, VR headsets, and the like).

### SUMMARY

This specification describes systems, methods, devices, and other techniques relating to real-time rendering of digital images and more particularly to effectively generating geometry-aware tokens from an image frame based on primitive information from a geometry buffer and providing the tokens to a transformer to process the image frame.

In general, innovative aspects of the subject matter described in this specification can include actions of obtaining, by one or more processors, a rendered image frame including a plurality of pixels and a set of geometric data stored in a buffer, the set of geometric data including geometric data associated with the plurality of pixels in the rendered image frame; identifying, by one or more processors, a plurality of patches in the rendered image frame, each patch of the plurality of patches including pixels from the plurality of pixels and corresponding to a primitive identified in the set of geometric data; generating, by one or more processors, a plurality of tokens associated with the plurality of patches based on a set of feature vectors of pixels in each patch; and generating, by one or more processors, a processed rendered image frame based on at least one of the plurality of tokens provided to a transformer.. Other implementations of this aspect include corresponding systems, apparatus, and computer programs, configured to perform the actions of the methods, encoded on computer storage devices.

These and other implementations can each optionally include one or more of the following features: in some examples, the set of per-pixel feature vectors for each patch of the plurality of patches includes per-pixel features associated with pixels in the patch and includes at least one of color data, depth data, or normal vector data. In some examples, generating the processed rendered image frame includes combining positional information associated with the plurality of patches with the plurality of tokens. In some examples, at least two patches of the plurality of patches are of non-linear shapes. In some examples, geometric data associated with each pixel includes at least one of a primitive identifier value, a normal vector value, or an albedo value, and wherein primitive identifier values for each pixel in a patch are same. In some examples, a first number of pixels in a first patch of the plurality of patches is unequal to a second number of pixels in a second patch of the plurality of patches. In some examples, a number of the plurality of patches exceeds a number of token inputs of the transformer, the actions further including: merging, by one or more processors, a first set of patches associated with a first set of low-ranked primitives in the rendered image frame into a second set of patches, wherein a total number of patches, including the number of patches in the second set of patches, is equal to the number of token inputs of the transformer, generating, by one or more processors, a reduced set of tokens based on the second set of patches, wherein the reduced set of tokens are the plurality of tokens. In some examples, a number of the plurality of patches is less than a number of token inputs of the transformer, the actions further including: padding or masking, by one or more processors, unused token inputs of the transformer. In some examples, noise content of the processed rendered image frame is less than noise content of the rendered image frame. In some examples, a resolution of the processed rendered image frame is higher than a resolution of the rendered image frame.

The present disclosure also provides a non-transitory computer-readable storage medium coupled to one or more processors and having instructions stored thereon which, when executed by the one or more processors, cause the one or more processors to perform operations in accordance with implementations provided herein.

It is appreciated that the methods and systems in accordance with the present disclosure can include any combination of the aspects and features described herein. That is, methods and systems in accordance with the present disclosure are not limited to the combinations of aspects and features specifically described herein, but also include any combination of the aspects and features provided.

Particular implementations of the subject matter described in this specification can be executed so as to realize one or more of the following advantages. The techniques discussed herein reduce the need for processing resources by leveraging geometric data already generated by the graphics pipeline to identify content-aware patches in the image frame. In particular, the graphics pipeline generates geometric data for each pixel in the image frame, where the geometric data can include values for properties such as instance identifier, normal vector, albedo, occlusion, smoothness, specular, etc. The techniques discussed herein identify patches in the image frame based at least on the instance identifier value for each pixel. These patches can be tokenized and provided to the transformer to generate a processed image frame. Because the geometric data for each pixel is already generated by other stages of the graphics pipeline, utilizing this geometric data to identify patches can obviate the need for high resource consuming convolution neural networks used in traditional approaches, and therefore reduce computing resources used for generating patches.

The details of one or more implementations of the subject matter described in this specification are set forth in the accompanying drawings and the description below. Other features, aspects, and advantages of the subject matter will become apparent from the description, the drawings, and the claims.

### BRIEF DESCRIPTION OF THE DRAWINGS

FIGs. 1A and 1B depict diagrams representative of techniques for real-time rendering of images.
FIGs. 2A to 2E depict diagrams and images representative of noise introduced in real-time rendering of images.
FIG. 3 depicts a block diagram of an example graphics processing pipeline with a transformer-based post processing engine.
FIG. 4 shows an example rendered image frame.
FIG. 5 shows a flow diagram of an example process for generating processed image frames from rendered image frames.
FIG. 6 shows an example of a computing device and associated accessories that can be employed to execute implementations of the present disclosure.

Like reference numbers and designations in the various drawings indicate like elements.

### DETAILED DESCRIPTION

The technology of this patent application is directed to real-time rendering of digital images and particularly to effectively generating geometry-aware tokens from an image frame based on primitive information from a geometry buffer and providing the tokens to a transformer to process the image frame. More particularly, the technology of this patent application relates to leveraging geometry data already available in the graphics pipeline to process image frames using transformers. Typically, transformers can be used to process image frames by dividing the image frame into patches, generating tokens associated with the patches, and feeding the tokens to a transformer trained for a specific application (e.g., denoising). Some approaches to generating patches includes utilizing content of the image frame to determine boundaries of the patches. However, these approaches rely on the color and texture of the image frame itself. For example, in one approach, the image frame is processed with a convolution neural network (CNN) to segment various primitives in the image frame. Patches corresponding to the identified primitives are generated and tokenized. Processing with CNNs can be costly in terms of time, power, and memory.

The techniques discussed herein ameliorate use of processing resources by leveraging geometric data already generated by the graphics pipeline to identify content-aware patches in the image frame. In particular, the graphics pipeline generates geometric data for each pixel in the image frame, where the geometric data can include values for properties such as instance identifier, normal vector, albedo, occlusion, smoothness, specular, etc. As an example, the techniques discussed herein can use the values of the instance identifier to identify pixels in the image frame that belong to the same primitive. Thus, for example, if the image frame includes a triangle and a square, the pixels forming the triangle will have the same instance identifier and the pixels forming the square will have the same instance identifier but distinct from the instance identifiers for the triangle. The techniques discussed herein identify patches in the image frame based at least on the instance identifier value for each pixel. These patches can be tokenized and provided to the transformer to generate a processed image frame. Because the geometric data for each pixel is already generated by other stages of the graphics pipeline, utilizing this geometric data to identify patches can obviate the need for high resource consuming CNNs, and therefore reduce computing resources used for generating patches.

To provide context for the subject matter of the present disclosure, real-time rendering includes the relatively rapid generation of digital images (referred to as images herein). For example, real-time rendering can be used to generate images as frames of videos at frame rates of 30 frames per second (FPS), 60 FPS, or higher. For certain use cases, such as video games, virtual reality (VR), simulations and the like, graphics are required to be rendered rapidly (e.g., ≥ 60 FPS), such as in response to user input. Using video games as a non-limiting example, real-time rendering enables players to see and interact with a game world that updates in real-time in response to player input (e.g., moving a character, changing a camera angle). The goal of real-time rendering is to produce visually convincing images at high speed. However, real-time rendering must balance visual quality with computational performance in terms of being achievable under realistic hardware constraints (e.g., processors and memory available in consumer gaming consoles, VR headsets, and the like).

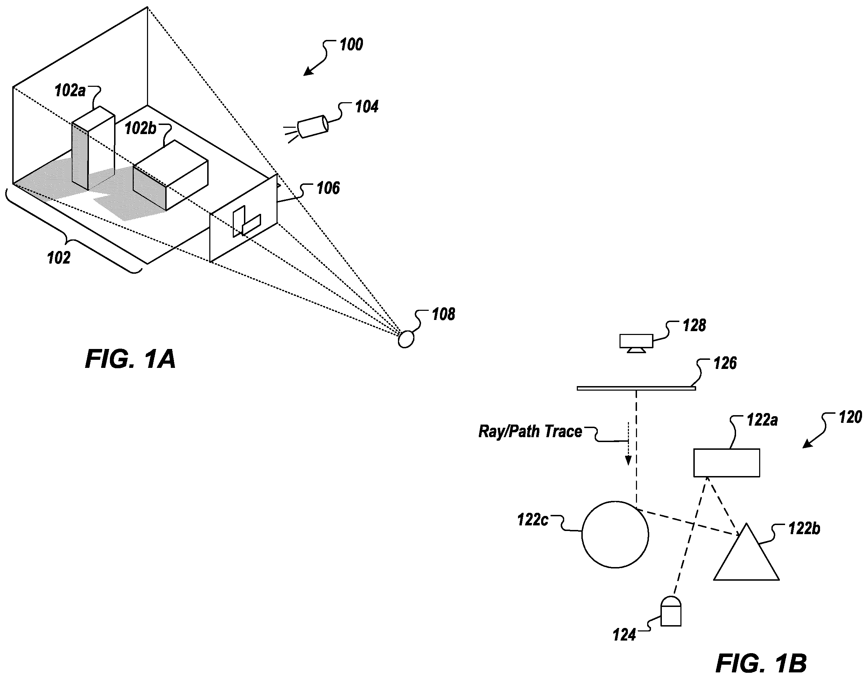

Real-time rendering of images is discussed in further detail herein with reference to FIGs. 1A and 1B, which depict schematic diagrams representative of techniques for real-time rendering of images. As used herein, the term real-time refers to execution of operations (e.g., processing data, transmitting data) without intentional delay given processing limitations of a system, the time required to accurately obtain data, store data, and the like, and any rate of change of data.

With particular reference to FIG. 1A, an environment 100 includes a multi-dimensional model 102 (a three-dimensional (3D) model) representative of a scene (e.g., a scene within a game world). For example, the multi-dimensional model 102 can be generated by an application (e.g., a video game application) and depicts objects 102a, 102b and represents interactions with and/or between the objects 102a, 102b within the scene. A light source 104 casts light on the scene that affects the appearance of the objects 102a, 102b within the scene. Although a single light source 104 is depicted, it is contemplated that multiple light sources can be provided. In the example of FIG. 1A, the light results in the objects 102a, 102b casting respective shadows.

With regard to real-time rendering, an image displayed within an image plane 106 is generated from the perspective of a camera 108. The image depicts a two-dimensional (2D) representation of the 3D scene. The image can be, for example, a frame of a series of frames to depict animation within the scene. That is, the image is regenerated at a frame-rate (e.g., ≥ 60 FPS) to depict changes in the scene over time (e.g., as the objects 102a, 102b interact with each other, as users interact with the objects, as the position of the camera 108 changes). The image is provided as a set of pixels (e.g., a 4K image (3840 x 2160 pixels), a 1080p image (1920 x 1080 pixels), a 1440p image (2560 x 1440 pixels). Each pixel is associated with a set of data that describes characteristics of subject matter that is depicted in the image (e.g., the objects 102a, 102b). Example data in the set of data can include color data (e.g., RGBA data), depth data (e.g., Z-buffer), stencil data, normal vector (surface direction), and the like.

With reference to FIG. 1B, techniques referred to as ray tracing and path tracing will be described. In general, ray tracing can be described as the operation of tracing a ray and finding its first intersection point (referred to as hit) with the geometry within the scene. Path tracing extends additional rays from hits (e.g., from the first hit determined using ray tracing) to effectively bounce around the geometry to define a light path.

Path tracing can be used for real-time rendering of high quality (e.g., photorealistic) images by simulating the manner in which light interacts with objects in a scene. FIG. 1B depicts an environment 120 representative of a scene having objects 122a, 122b, 122c. A light source 124 emits light on the scene and a camera 128 generates images of the scene. An image can be represented in an image plane 126.

In ray tracing, rays are emitted from the camera 128 for each pixel of the image and extend into the scene. When a ray (primary ray) hits an object, such as one of the objects 122a, 122b, 122c, other rays (secondary rays) are generated in other directions depending on the surface characteristics defined for the point of contact of the object. More particularly, in contacting an object, each ray can reflect, refract, or scatter depending on the properties of the object (e.g., material, texture, geometry). As such, a ray can bounce between objects within the scene until either reaching a threshold number of bounces or reaching the light source 124. By limiting a number of bounces between objects, computational performance can be maintained in real-time settings. This improves the computational efficiency of ray tracing and path tracing but does not capture the full complexity of how light would actually bounce around the scene, which is referred to as global illumination.

Path tracing performs pixel shading to simulate global illumination to account for more complex interactions and to improve image realism. Path tracing, which includes multiple bounces within the scene along paths, simulates complex light paths including indirect lighting, color bleeding, caustics, and the like. For path tracing, each pixel requires numerous rays (tens, hundreds, thousands) to be considered in order to provide a noise-free, accurate image. This is computationally expensive and too slow for real-time rendering under realistic hardware constraints.

For each pixel, the rendering equation is approximated to determine the total outgoing light from the surface represented in the respective pixel as a function of emitted light, incoming light, material properties (e.g., mirror, glossy, matte), and geometric properties (e.g., Lambert Cosine Law). Due to the complexity of the rendering equation, which is a recursive equation, particularly when accounting for indirect lighting and multiple light-surface interactions, a direct analytical solution is not feasible.

To address the computational expense of techniques such as ray tracing and path tracing and the infeasibility of calculating the rendering equation, Monte Carlo rendering has become a widely adopted technique. Monte Carlo rendering produces photorealistic images by simulating the physical behavior of light. At a high-level, Monte Carlo rendering uses probability and randomness to approximate lighting values that would be too complex and/or too slow to compute under realistic hardware constraints.

Specifically, Monte Carlo rendering utilizes stochastic sampling to approximate solutions to the rendering equation, discussed above, which models the transport of light in a virtual scene. Monte Carlo rendering employs random sampling to estimate the integral components of light transport, where light contribution is computed based on probabilistic sampling, using functions such as the bidirectional reflectance distribution function (BRDF) to evaluate the surface response. The results from the sampled paths are averaged to estimate the color or radiance of each pixel in the image. As more samples are taken, the estimate converges toward an accurate solution, enabling realistic simulation of lighting phenomena such as soft shadows, indirect illumination, and caustics.

In achieving convergence, Monte Carlo rendering limits the number of paths (rays cast) per pixel, where each path is considered a sample. Accordingly, a metric, referred to as samples per pixel (SPP), is used to limit a number of paths (rays cast) processed for each pixel. The higher the SPP, the more computationally intensive (and slow) the processing and the better the accuracy of the rendered image. The lower the SPP, the more computationally efficient (and fast) the processing, but accuracy is lost. Further, due to its stochastic nature, Monte Carlo rendering introduces noise, which increases with lower SPPs. The more noise, the lower the visual fidelity (accuracy) of the rendered image.

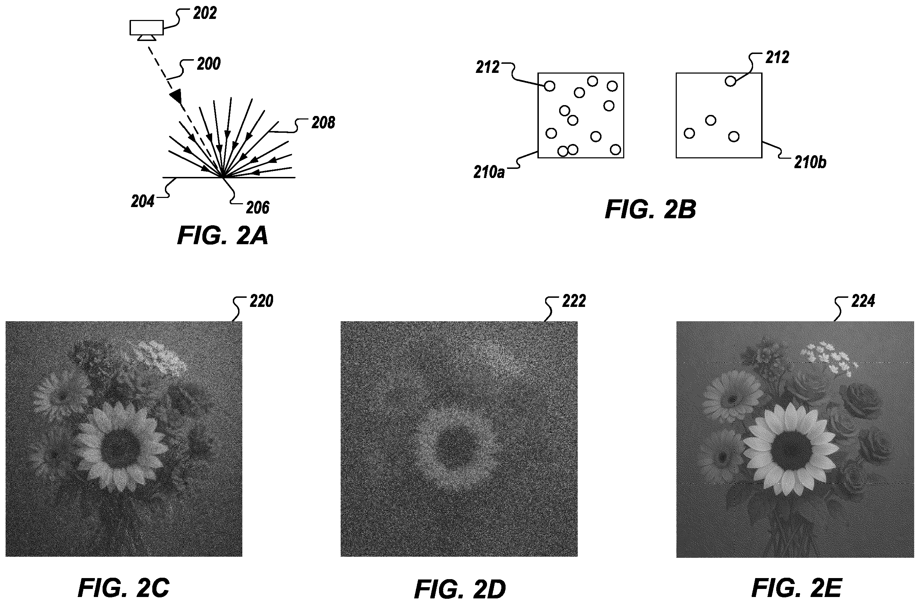

FIGs. 2A to 2E depict diagrams and images representative of noise introduced in real-time rendering of images. In the example of FIG. 2A, for a pixel, a path 200 of a ray is cast from a camera 202 and contact a surface 204 at a point 206. Here, the surface 202 represents a surface of an object within a scene and the point 206 is the point, from which the ray is reflected to the camera 202 along the path 200. As discussed above, the rendering equation is solved for the ray to determine the outgoing light of the rays toward the camera 202. As discussed above this, among other properties, is a function of incoming light represented as incoming rays 208 (e.g., from direct light source(s), from indirect light source(s)). The ray can be one of tens, hundreds, thousands, or more rays for the pixel that could be reflected from the surface 204 at various angles. Ideally, the outgoing light for the pixel would be calculated over all of the rays with a given outgoing light for each ray. However, this is computationally infeasible, particularly under realistic hardware constraints.

To address this, and as discussed above, Monte Carlo rendering randomly samples rays (paths) to provide a sample of rays that the rendering equation is solved over. That is, Monte Carlo rendering is performed using a selected SPP to limit the number of rays (paths) considered. To further improve computational efficiency, the number of incoming rays 208 considered in the calculations can be limited. For example, techniques, such as importance sampling and multiple importance sampling can be used to limit the number of incoming rays 208 used for the calculations.

FIG. 2B depicts a pixel 210a and a pixel 210b, each pixel 210a, 210b having multiple samples 212, each sample indicating a respective ray that contributes an outgoing light value to the total outgoing light value determined for the respective pixel. In the example of FIG. 2B, the pixel 210a has a first SPP (e.g., 12 SPP) and the pixel 210b has a second SPP (e.g., 4 SPP) that is lower than the first SPP. As such, the first SPP results in a noisy image that has a higher fidelity than a noisy image resulting from the second SPP. For example, an image 220 of FIG. 2C can represent a noisy image that is generated using the first SPP and an image 222 of FIG. 2D can represent a noisy image that is generated using the second SPP. As represented in FIGs. 2C and 2D, lower SPPs result in a higher amount of noise. As such, while lower SPPs are more computationally efficient, they result in images having higher amounts of noise and thus, less accurate (lower fidelity) images.

For real-time rendering applications, denoising is used to maintain visual fidelity (accuracy) and computational performance. At a high-level, denoising includes applying a denoiser to noisy images to smooth out the noise and produce a cleaner, more visually accurate image (i.e., an output image that is less noisy than an input image). Denoising can include spatial filtering based on neighboring pixels and temporal filtering based on pixels from previous frames. In some cases, denoising can include using machine learning (ML) models that are trained to reconstruct higher quality images from lower quality, noisy images. With reference to FIG. 2D, an image 224 can be provided as a denoised image of one of the images 220, 222 of FIGs. 2C and 2D, respectively.

In Monte Carlo rendering, denoising can be implemented in various ways. While convolutional neural networks (CNNs) are commonly used for Monte Carlo rendering, Vision Transformers (ViTs) have recently shown strong performance in image understanding and are being applied to Monte Carlo rendering pipelines. A ViT is a transformer-based neural network adapted for image processing tasks, such as denoising and adaptive sampling in Monte Carlo rendering. A ViT operates on noisy, low SPP rendered images and can utilize auxiliary data, such as surface normals, depth, and albedo. The input image can be divided, for example, into fixed or arbitrarily sized patches, which are processed as tokens (e.g., using self-attention) to capture spatial and contextual relationships. The output of the ViT is a denoised image approximating the quality of a high SPP render. A ViT can also support adaptive sampling by identifying regions requiring additional samples, thereby improving efficiency and image fidelity, while reducing computational cost.

As mentioned previously, some approaches to image processing that use transformers incorporate CNNs to determine patches within the image frame and generate tokens based on the patches. The techniques discussed herein in contrast utilize the geometric data generated in previous stages of the graphics pipeline to identify patches in the image frame. As a result, the techniques discussed herein obviate the need for running resource hungry CNNs for determining patches. Thus, the techniques discussed herein provide benefits in reduction of latency, decrease in power consumption, and decrease in memory requirement. The reduction in latency is of particular benefit in applications where a graphic processing pipeline generates image frames at a high rate such as 30 frames/s, 60 frames/s, 120 frames/s, and the like. Such applications can include gaming where image frames are generated in real time. In such instances, high latency in generating image frames can directly impact the frame rate at which the pipeline generates frames. A reduction in the frame rate can have a negative impact on the quality of media displayed to the viewer. The reduction in the latency in generating the image frames provided by the techniques discussed herein reduce the burden on the graphics processing pipeline to generate image frames at high frame rates, and thereby allow the pipeline to generate frames at high image frame rates which results in improvement in the quality of the media displayed to the viewer.

In view of the foregoing, implementations of the present disclosure provide real-time rendering of digital images and particularly to effectively generating geometry-aware tokens from an image frame based on primitive information from a geometry buffer and providing the tokens to a transformer to process the image frame. More particularly, the technology of this patent application relates to leveraging geometry data already available in the graphics pipeline to process image frames using transformers. The following portions discuss these techniques in detail.

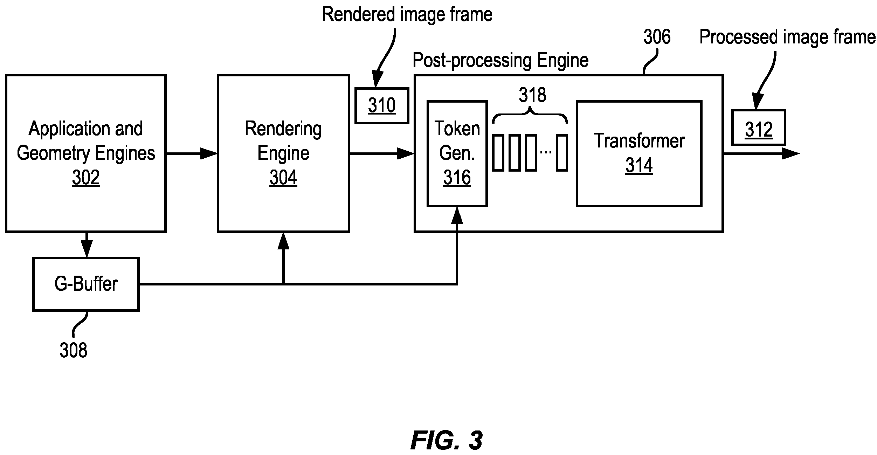

FIG. 3 depicts a block diagram of an example graphics processing pipeline 300 with a transformer-based post processing engine. The graphics processing pipeline 300 includes an application and geometry engine 302 a rendering engine 304 and a post-processing engine 306. It should be noted that the example graphics pipeline 300 can include additional components not shown here. Further, two or more components can be merged into one component, or any component can be split into two or more subcomponents. The graphics pipeline 300 can be executed on a central processing unit (CPU), a graphics processing unit (GPU), or a combination of the CPU and the GPU. In some instances, portions of the example graphics pipeline 300 can be implemented in software while other portions can be implemented in hardware or a combination of software and hardware.

The application and geometry engine 302 can execute an application stage that can be controlled by software running on a CPU. The software can specify the parameters of the image frame to be generated by the graphics processing pipeline 300. In instances where the processing environment is video games, the application can include a game application or software that provides higher level details such as the primitives to be displayed in the image frames. The application and geometry engine 302 can also execute a geometry stage, which generates details of the primitives to be displayed on the image frame. In some examples, the geometry stage can carry out coordinate system transformations such that all primitives and objects are represented in the same coordinate system. For example, based on where a camera has been placed in relation to the geometry in the scene, the geometry stage can transform the coordinate system into a view coordinate system which can place the camera in the origin of the coordinate system.

In some examples, the geometry stage can perform vertex shading in which vertices of objects are processed and transformed in the correct coordinate space to be shaded. Shading is an operation that determines the effect of a light source on the geometry. At least one approach to determining effects of light on geometry has been discussed above in relation to ray tracing. The geometry stage can evaluate shading equations at various points on the objects to determine the amount of light received at each of these points. The amount of light received in combination with the object's material determine the appearance of the object after the shading operation is concluded. Materials are a description of an object's appearance in the coordinate system. The description can include a color value or complex physical representation of the object. The geometry stage can also perform projection operations in which the view of the objects is transformed based on the projection type, such as orthographic or perspective projection. Projection transforms the geometry from three dimensions to two dimensions. The depth dimension is typically not stored in the generated image and is instead stored in a separate buffer known as Z-buffer.

After applying the view and projection transformations, the geometry stage can apply clipping, in which portions of primitives that reside outside of a view volume are clipped. The geometry stage can then execute rasterization in which the transformed and projected vertices of geometry along with their shading data are processed to compute the colors of the pixels covered by the geometry. For example, rasterization can include triangle traversal, pixel shading, and merging. For example, triangle traversal can include determining which pixels have their center covered by each triangle of the geometry. A fragment is generated for the part of the pixel that is covered. Fragments are a collection of values produced by the rasterizer and represent a sample-sized part of the primitive that is rasterized. The size of the fragment is relative to the pixel area, but the rasterizer can produce multiple fragments from the same triangle per-pixel. For fragment shading, the geometry stage executes all pre-fragment computations. These computations use interpolated shading data produced by triangle traversal. The purpose of the fragment shading stage is to compute a final color value, considering all shading data previously determined for each fragment. The geometry stage further executes a merging operation in which the shaded fragments are processed by raster operations or blend operations. The fragments that remain after the operations are stored in the color buffer. The color buffer is a rectangular array of colors, each one of them consisting of a red, blue, and green component. The geometry stage also resolves depth visibility of the geometry based on data stored in the Z-buffer. Only objects visible from the point of view of the camera are stored in the color buffer.

The geometry stage also stores various aspects of the pixels in a geometry buffer or G-buffer. The G-buffer stores geometry data associated with each pixel of the image frame. For example, the geometry stage can store the RGB values of each pixel, the material identifier of each pixel, a surface normal orientation of each pixel, depth or world position of each pixel, etc. The values of each of these aspects of the pixels are determined during the above-described operations. The geometry stage can output a rendered image frame which can be processed further by the pre-processing engine 306 before being displayed to the viewer.

The rendered image frame 310 can be provided to the post-processing engine 306 for further processing. The post-processing engine 306 can be configured to execute one or more processing operations on the rendered image frame 310 and generate a corresponding processed image frame 312. For example, the post-processing engine 306 can be configured to execute one or more operations such as denoising operations on the rendered image frame, or super-resolution operations on the rendered image frame. The post-processing engine 306 can include a token generation engine 316 and a transformer 314. The token generation engine 316 can be configured to identify patches in the rendered image frame 310 and generate tokens corresponding to the identified patches. The transformer 314 can be trained on the post-processing task(s) such as, and without limitation, denoising and super-resolution processing. In some examples, the transformer 314 can be implemented using a ViT that receives as input tokens corresponding to various patches of the rendered image frame 310 to generate the processed image frame 312. The token generation engine 316 generates tokens based on the rendered image frame 310 and geometric data included in the G-buffer 308.

The token generation engine 316 identifies one or more patches in the rendered image frame 310. Patches can be considered as a cluster of pixels. To identify the one or more patches, the token generation engine 316 identifies clusters of pixels that can be grouped together based on one or more criterion. For example, where generating patches is based on object or instance identifier, the token generation engine 316 can access the data of the G-buffer 308 and identify pixels that have the same object or instance identifier.

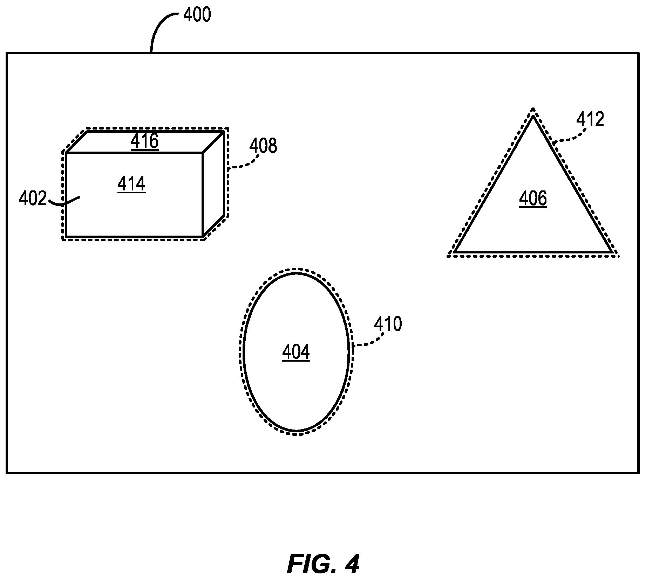

FIG. 4 shows an example rendered image frame 400. In particular, FIG. 4 shows identification of patches in the rendered image frame 400. The rendered image frame 400 can be one example of the rendered image frame 310 discussed in relation to FIG. 3. The rendered image frame 400 includes three primitives: a three-dimension depiction of a rectangular prism 402, an ellipse 404, and a triangle 406. It should be noted that the primitives depicted in FIG. 4 are examples only, and that different implementations can include different objects in the rendered image frame 400. The token generation engine 316 can refer to geometric data associated with the rendered image frame 400 and stored in the G-buffer 308. In one example, the token generation engine 316 can identify those pixels in the rendered image frame 400 that have the same object or instance identifiers.

Object or instance identifiers for a pixel can identify the primitive or instances of a primitive to which the pixel belongs. In the rendered image frame 400, the geometric data in the G-buffer 308 can include the identities of three different primitives: an identity for the rectangular prism 402, an identity for the ellipse 404, and an identity for the triangle 406. The geometric data can include data associated with each pixel in the rendered image frame 400. For example, all the pixels forming the rectangular prism 402 can include the same value or identity of the object or instance identifier (e.g., object/instance identifier: "01" corresponding to a primitive). The token generation engine 316 can identify the different primitives in the rendered image frame 400 based on the identities, and determine which pixels have the object or instance identifier with the same value or identity. Thus, the token generation engine 316 can identify the pixels in the rendered image frame 400 that have the same value or identity for their respective object or instance identifier and group those pixels in one patch. For instance, the token generation engine 316 can identify the pixels with the identity or value associated with the rectangular prism 402 and cluster those pixels into a first patch 408 (indicated with dotted lines). Similarly, the token generation engine 316 can identify the pixels that have an associated identity or value that designates the ellipse 404 and cluster those pixels into a second patch 410 (shown with dotted lines). In a similar manner, the token generation engine 316 can cluster pixels that form the triangle into a third patch 412 (shown with dotted lines).

The patches identified in the rendered image frame 400 can have boundaries that can be based on the primitive and therefore can be different from each other. For example, the first patch 408 can have a shape that is different from the shape of the second and third patches (410 and 412) because of different shaped primitives. Unlike some other approaches that form liner (rectangular or square) shaped patches, the patches generated by the token generation engine 316 have the shape of the underlying primitive. This helps in avoiding scenarios, which is common in approaches that form linear shaped patches, where primitives are divided into two or more patches. Instead, by preserving the whole primitive in their respective patches can improve the quality of output generated by the transformer, which establishes relationship between various tokens, and therefore, primitives. With patches that do not include the whole primitive but portions of one or more primitives, the relationships established by the transformer may not accurately reflect the actual relationships of the primitives in the rendered image frame 400.

The token generation engine 316 can generate tokens associated with the identified patches (e.g., the first (402), the second (410), and the third (412) patches). Approaches with equal sizes patches generated tokens from patches by flattening each patch and carrying out a linear projection of the flattened patch. Flattening refers to converting the per-pixel feature vectors into a 1-D array and using linear projection to determine an embedding for the 1D array. Applying this process to all the patches results in a token for each patch. This process of generating tokens may be incompatible with unequal sized patches. For example, the number of pixels in each of the patches shown in FIG. 4 may be different, resulting in unequal dimensions of vectors generated for the patches.

One approach to generating tokens for unequal sized patches is to generate, for each patch, per-pixel vectors for each pixel in the patch, generate embeddings from the per-pixel vectors, and aggregate per-pixel embeddings into fixed length embeddings. This results in equal length embeddings for all the patches. Per-pixel vector can refer to a vector that includes values of various aspects of the pixel. For example, a per-pixel vector can include one or more of RGB values, depth (or number of bits used to represent the values), normal vector (referring to the value of the normal vector in the G-buffer), etc. Values of one or more aspects captured in the per-pixel vector can be selected from the geometric data associated with the pixel and stored in the G-buffer 308.

In one approach, the token generation engine 316 can be configured to use pooling functions to generate equal sized embeddings for the patches. Pooling functions can include, for example, average pooling, max pooling, Deep Sets, or intra-primitive self-attention. The token generation engine 316 can be configured to generate per-pixel embeddings and use the pooling function to select or generate an embedding for the patch. For example, if average pooling is used, then the token generation engine 316 can be configured to determine an average value of the per-pixel embeddings within a patch and using the average value as the token for the patch. If max pooling is used, then the token generation engine 316 can be configured to determine a maximum value from the per-pixel embeddings and use the maximum value as the token for the patch. In some examples, the token generation engine 316 can be configured to use a combination of the average value and the maximum value as the token for the patch. In one approach, the token generation engine 316 can concatenate the average value and the maximum value and use the resulting value as the token for the patch. Average pooling can capture overall characteristics common in the patch, while max pooling identifies the most salient features within the patch. By using values from both the average pooling and the max pooling, a comprehensive representation of the features of the patch can be captured. In some examples, sum pooling may also be used, where the token generation engine 316 can be configured to sum all the per-pixel embeddings associated with the patch, and use the resulting value as the token for the patch. Again, a combination of any of the pooling techniques can be utilized to generate the token for the patch.

Deep Sets is a neural network architecture designed to process unordered collections of data to generate fixed length embeddings. Deep Sets can include a two-step process. In the first step, the architecture can transform each per-pixel vector associated with the patch by a symmetric mapping function. In some examples, a neural network can be used to implement the symmetric mapping function, although other implementations of symmetric mapping function can also be used. In the second step, the architecture uses a pooling function to aggregate the transformed per-pixel vectors. As discussed above, pooling functions such as max pooling, average pooling, sum pooling or other pooling functions can be used. The token generation engine 316 can implement the Deep Sets architecture to determine the aggregate value of the transformed per-pixel vectors and use the aggregate value as the token for the patch.

The token generation engine 316 can generate fixed length tokens based on one or more techniques discussed above. In particular, the token generation engine can generate a token for each patch in the rendered image frame 400. The number of inputs to the transformer are typically fixed. However, the number of patches, and therefore the number of tokens, can vary from one image frame to another. In such instances, the token generation engine 316 can be configured to either add or remove tokens such that the number of tokens for the rendered image frame 310 is equal to or less than the number of inputs of the transformer 314.

In instances where the number of tokens exceeds the number of inputs of the transformer 314, the token generation engine 316 can use one or more approaches to reduce the number of tokens. In one approach, the token generation engine 316 can be configured to identify patches corresponding to the top k primitives in terms of projected area or other aspect of the primitives. The token generation engine 316 can be configured to select tokens corresponding to the identified patches. Patches associated with other primitives can be merged into two or more merged patches. For example, the token generation engine 316 can identify two or more patches for merger into a merged patch and determine a token for the merged patch. In some examples, the token generation engine 316 can merge the patches associated with the primitives other than the top *k* primitives as discussed above. In some other examples, the token generation engine 316 can merge patches associated with the smallest *p* primitives in the image frame into a merged patch and determine a token for the merged patch. By merging two or more primitives for which patches are generated, the token generation engine 316 can reduce the number of tokens.

In instances where the number of tokens is less than the number of inputs of the transformer, the token generation engine 316 can be configured to mask the unused inputs of the transformer. For example, if the number of tokens is *t*, and the number of inputs of the transformer is equal to *i,* then the token generation engine 316 can mask *i - t* inputs of the transformer. For example, the token generation engine 316 can generate a mask to explicitly indicate to the transformer that the *i - t* inputs to the transformer should be ignored. The mask can be a boolean tensor with the same sequence length as the input of the transformer, where, for example, a 0 corresponding to an input position indicates to the transformer that that particular input is padded and should be ignored. The attention scores corresponding to the masked inputs can be set to a value or values that result in effectively no contribution from the masked inputs to the operation of the transformer.

In another approach, the token generation engine 316 can be configured to divide the primitives into smaller components and generate separate tokens for the components, thereby increasing the number of tokens. In one example, the token generation engine 316 can be configured to utilize the 'normal vector' value of the pixels within a primitive to divide the primitive into smaller components. Referring, for example, to FIG. 4, the rectangular prism 402 includes at least a first surface 414 and a second surface 416. As discussed above, the token generation engine 316 is configured to identify the pixels associated with a primitive based on the object or instance identifier values. As both the first surface 414 and the second surface 416 belong to the rectangular prism 402 primitive, the values of object or instance identifiers of the pixels within the first surface 414 and the second surface 416 will be the same. However, the normal vector values associated with the pixels that belong to the first surface 414 will be different from the normal vector values associated with pixels that belong to the second surface 416. The difference in values can be attributed to the fact that the two surfaces face different directions.

The token generation engine 316 can be configured to determine patches based also on the normal vector values. In relation to the rectangular prism 402 primitive, the token generation engine 316 can identify those pixels associated with the primitive (having the same object or instance identity values) and with a surface (having the same normal vector values) of the primitive and use the identified pixels as a separate patch. In this manner, the token generation engine 316 can generate three patches, one for each visible surface of the rectangular prism 402 primitive. As a result, the number of patches, and therefore the number of tokens, increases. The token generation engine 316 can determine the number of additional tokens needed to have the total number of tokens to be equal to the number of inputs designated for the tokens, and accordingly divide the primitives into a number of additional components that is equal to the number of additional tokens needed.

In another approach, the token generation engine 316 can be configured to divide very large primitives into components. The threshold size (e.g., in terms of the number of pixels associated with the primitive) of the primitive over which the token generation engine 316 determines to divide the primitive can be pre-determined. For example, the token generation engine 316 may divide the primitive into components if the size of the primitive is greater than half the size of the image frame. In another example, the token generation engine 316 may divide the primitive into components if the size of the primitive is greater than twice (or some other predetermined value greater than 1) the size of the next smallest sized primitive.

The token generation engine 316 can be configured to include positional information associated with the patches for which tokens have been generated. Transformers are typically agnostic to the order of the input tokens. To preserve the positional relationship of the primitives, the token generation engine 316 can include primitive-level geometric information such as centroid of the primitive, oriented bounding box extents, surface area, etc., along with the tokens. For example, referring to FIG. 4, the token generation engine 316 can determine the positional information of the rectangular prism 402 primitive, and include the positional information with the token associated with the rectangular prism 402. In some examples, such as those that employ a ViT, learnable positional embeddings are often used, where each predefined location can have a unique learned embedding. However, when dealing with patches that have arbitrary shapes and positions within the image frame, using learnable positional embeddings for every pixel may result in an excessive number of parameters. Nevertheless, where the computing system has resources to accommodate the large number of parameters, learned positional embeddings can be used. In some other instances, the positional information of a patch can be amended to the token associated with the patch and the combination can be processed with a liner projection function to obtain positional embeddings. In some examples, the positional embedding of a patch can be determined separately from the token of the patch, and the combination of the positional embedding and token of the same patch is fed to the transformer.

Referring to FIG. 3, the token generation engine 316 provides the tokens (and the positional embeddings) 318 to the transformer 314. As mentioned above, the transformer 314 can be implemented using a ViT. Other implementations of the transformer 314 can also be used. For example, a hybrid CNN-ViT or an encoder-decoder transformer can be utilized to implement the transformer 314. The transformer 314 can be trained based on the desired processed image frame. For examples, if the post-processing engine 306 is configured to carry out denoising operations, then the transformer 314 can be trained on denoising datasets. If super-resolution is the desired operation, then the transformer 314 can be trained on super-resolution dataset. Other operations such as classification, retrieval, segmentation, scene understanding, etc., can also be implemented by the post-processing engine 306. For each of these operations, the transformer can be trained on the appropriate dataset.

The following portion discusses flow diagram or one or more processes that can be executed by the graphics processing pipeline 300 to generate the processed image frame 312.

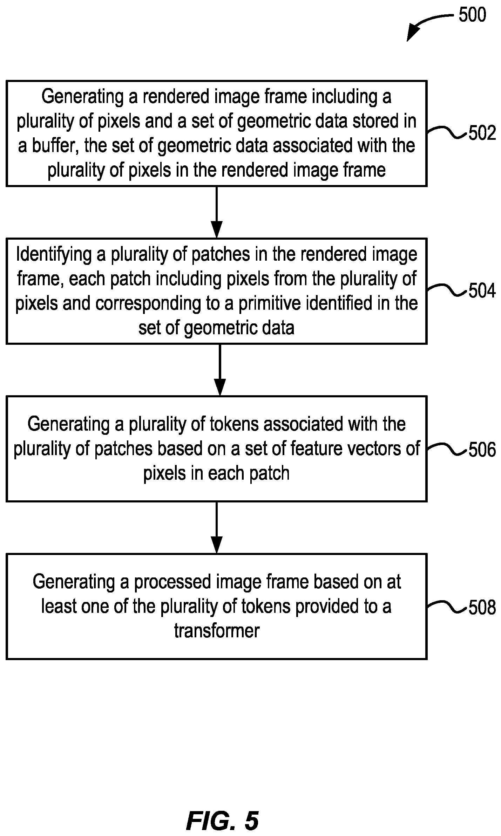

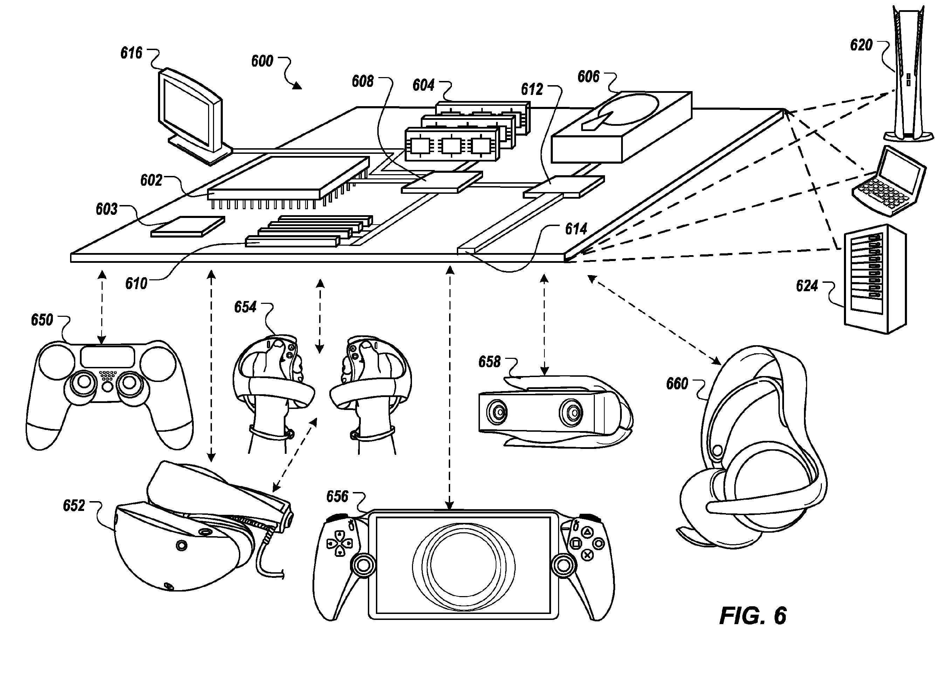

FIG. 5 shows a flow diagram of an example process 500 for generating processed image frames from rendered image frames. The example process 500 can be executed, for example, by a CPU, a GPU, or a combination of the CPU and the GPU. Generally, the example process 500 can be executed by the computing device 600 discussed in relation to FIG. 6.

The example process 500 includes generating a rendered image frame including a plurality of pixels and a set of geometric data stored in a buffer, the set of geometric data associated with the plurality of pixels in the rendered image frame (502). At least one example of this process step is discussed herein. In particular, referring to FIG. 3, the application and geometry engine 302 and the rendering engine 304 can generate the rendered image frame 310. In addition, the application and geometry engine 302 can generate a set of geometric data that is stored in the G-buffer 308. The geometric data can include information on the features of each pixel. For example, the geometric data can include values of RGB, object or instance identifier values, normal vector values, albedo values, texture values, material values, specular values, etc.

The example process 500 further includes identifying a plurality of patches in the rendered image frame, each patch of the plurality of patches including pixels from the plurality of pixels and corresponding to a primitive identified in the geometric data (504). At least one example of this process stage has been discussed herein. For example, referring to FIG. 3, the token generation engine 316 can identify from the geometric data pixels in the rendered image frame that belong to the same primitive. For example, the rendered image 400 shown in FIG. 4 can include a rectangular prism 402, an ellipse 404, and a triangle 406. The geometric data can include object or instance identifier values for each of the primitives in the rendered image 400. The token generation engine 316, based on the geometric data, determines the pixels that have the same object or instance identifier value. These pixels can be associated with a primitive. For example, all the pixels that form the rectangular prism 402 can have the same object or instance identifier value. By identifying the pixel with the same object or instance identifier value, the token generation engine 316 can identify the patches within the rendered image frame 400. For example, the token generation engine 316 can generate the first patch 408 that includes all the pixels that form the rectangular prism 402 primitive.

The example process 500 also includes generating a plurality of tokens associated with the plurality of patches based on a set of feature vectors of pixels in each patch (506). At least one example of this process stage has been discussed herein. For example, referring again to FIGs. 3 and 4, the token generation engine 316 can generate a plurality of tokens 318 associated with the plurality of identified patches. The token generation engine 316, for each patch, can generate feature vectors for the pixels within the patch. The token generation engine 316 aggregates the feature vectors of the pixels within the patch into a token for the patch. In particular, the token generation engine 316 generates per-pixel embeddings for the pixels in the patch based on the per-pixel feature vectors. As the number of pixels in a patch can be different from the number of pixels in another patch, the token generation engine 316 can utilize functions such as pooling functions to generate tokens of equal size for all the patches.

The example process 500 further includes generating a processed image frame based on at least one of the plurality of tokens provided to a transformer (508). Referring again to FIG. 3, the token generation engine 316 provides the generated tokens 318 to the transformer 314, which, in turn, generates the processed image based in part on the tokens 318.

In some examples, in relation to the processor 500, the set of per-pixel feature vectors can include at least one of RGB data, depth data, and normal vector value. The RGB data provides the pixel value in the three-color channels. Depth data indicates the number of bits used to encode the pixel value. The normal vector value indicates the direction of a vector that is normal to a surface at the pixel.

In some examples, generating the processed rendered image frame includes combining positional information associated with the plurality of patches with the plurality of tokens. As discussed above, the token generation engine 316 can combine positional information such as the centroid, bounding box extents, surface area, etc. associated with the patches with the plurality of tokens and providing the combination to the transformer 314.

In some examples, at least two patches of the plurality of patches are of non-linear shapes. As discussed above, the token generation engine 316 can generate the plurality of patches based on the shapes of the primitives in the rendered image frame. Thus, if the primitives have non-linear shape, that is, have at least a portion of the perimeter that is not a straight line, the corresponding patch will also have a non-linear shape.

In some examples, the geometric data associated with each pixel includes at least one of a primitive identifier value, a normal vector value, or an albedo value, and where the primitive identifier values for each pixel in a patch are equal. As discussed above, the geometric data stored in the G-buffer 308 can include values of various features of the corresponding pixel. The primitive identifier value can refer to the object or instance identifier value, which indicates the primitive with which the pixel is associated. The geometric data can also include normal vector value, which indicates the orientation of a vector at the pixel and normal to the surface on which the pixel is positioned. An albedo value indicates the reflectivity of the pixel. As indicated above, the primitive identifier values or the object or instance identifier values of all the pixels that belong to the same primitive can be equal.

In some examples, a first number of pixels in a first patch of the plurality of patches is unequal to a second number of pixels in a second patch of the plurality of patches. This aspect speaks to the contrast between some other approaches to identifying patches, where the rendered image frame is divided into multiple, equal sized squares. As the sizes of the square patches are equal, the number of pixels in a first patch will be equal to the number of pixels in the second patch. In contrast, the approach discussed herein defines patches based on the shape and size of the primitives in the rendered image frame. As primitives can be of different sizes and shapes, a first number of pixels in a first patch associated with a first primitive is unequal to a second number of pixels in a second patch associated with a second primitive.

In some examples, where the plurality of patches exceeds a number of token inputs of the transformer, the process further includes merging a first set of patches associated with a first set of low-ranked primitives in the rendered image frame into a second set of patches. The set of low-ranked primitives can correspond to, for example, a set of smallest k primitives. The token generation engine 316 can merge patches associated with the set of low-ranked primitives into a smaller number of patches, such that the total number of patches is equal to the number of token inputs of the transformer. The token generation engine 316 can generate tokens based on the reduced number of patches to generate a reduced set of tokens. In instances where the number of patches is less than the number of token inputs of the transformer, the token generation engine 315 can pad or mask the unused token inputs of the transformer.

FIG. 6 shows an example of a computing device 600 and associated accessories that can be employed to execute implementations of the present disclosure. The computing device 600 is intended to represent various forms of gaming consoles such as PS5^{®}, PS4^{®}, PS3^{®}, PS2^{®} etc., desktops, workstations, personal digital assistants, servers, blade servers, mainframes, and other appropriate computers. The components shown here, their connections and relationships, and their functions, are meant to be examples only, and are not meant to be limiting. The computing device 600 can form at least a portion of a gaming system that can include one or more remote computing devices such as ones implementing a cloud-based portal or gaming platform.

In various implementations, the computing device 600 includes some combination of one or more processors or central processing units (CPUs) 602, one or more graphic processing units (GPUs) 603, memory 604, one or more storage devices 606, a high-speed interface 608, and/or a low-speed interface 612. In some implementations, the high-speed interface 608 connects to the memory 604 and multiple high-speed expansion ports 610. In some implementations, the low-speed interface 612 connects to a low-speed expansion port 614 and the storage device 604. In some implementations, the high-speed interface 608 connects to the storage device 604. Each of the processor 602, the GPU 603, the memory 604, the storage device 606, the high-speed interface 608, the high-speed expansion ports 610, and the low-speed interface 612, are interconnected using various buses, and may be mounted on a common motherboard or in other manners as appropriate. The processor 602 can process instructions for execution within the computing device 600, including instructions stored in the memory 604 and/or on the storage device 606 to display graphical information for a graphical user interface (GUI) on an external input/output device, such as a display 616 coupled to the high-speed interface 608. In other implementations, multiple processors and/or multiple buses may be used, as appropriate, along with multiple memories and types of memory. In addition, multiple computing devices may be connected, with each device providing portions of the necessary operations (e.g., as a server bank, a group of blade servers, or a multi-processor system).

The memory 604 stores information within the computing device 600. In some implementations, the memory 604 is a volatile memory unit or units. In some implementations, the memory 604 is a non-volatile memory unit or units. The memory 604 may also be another form of a computer-readable medium, such as a magnetic or optical disk. In some implementations, the memory 604 includes Graphics Double Data Rate (GDDR) memory such as GDDR6 memory configured to provide a unified memory architecture with a high bandwidth. In some implementations, the memory can include high speed memory such as GDDR2, GDDR3, GDDR4, GDDR5, GDDR5X, GDDR6X, GDDR6W or GDDR7. Such high-speed memory can facilitate rapid data access and seamless multitasking, supporting gaming and multimedia applications.

The storage device 606 is capable of providing mass storage for the computing device 600. In some implementations, the storage device 606 may be or include a computer-readable medium, such as a hard disk device, an optical disk device, a flash memory, or other similar solid-state memory device, or an array of devices, including devices in a storage area network or other configurations. In some implementations, the storage device 606 can include a high-capacity solid-state drive (SSD) configured to support a high throughput (e.g., 5.5 GB/s or more). Such an SSD can facilitate fast load times, enabling near-instantaneous game booting, level transitions, and asset streaming. In some implementations, the storage device 606 can be configured to support expandable storage via compatible non-volatile memory express (NVMe) SSDs. Instructions can be stored in an information carrier, and when executed by one or more processing devices, such as processor 602, perform one or more methods, such as those described above. The instructions can also be stored by one or more storage devices, such as non-transitory computer-readable or machine-readable mediums, such as the memory 604, the storage device 606, or memory on the processor 602. The instructions can constitute software for providing interactive game play on a user interface such as a graphical user interface (GUI) presented on the display 616.

The high-speed interface 608 manages bandwidth-intensive operations for the computing device 600, while the low-speed interface 612 manages lower bandwidth-intensive operations. Such allocation of functions is an example only. In some implementations, the high-speed interface 608 is coupled to the memory 604, the display 616 (e.g., through a graphics processor or accelerator), and to the high-speed expansion ports 610, which may accept various expansion cards. In the implementation, the low-speed interface 612 is coupled to the storage device 606 and the low-speed expansion port 614. The low-speed expansion port 614, which may include various communication ports (e.g., Universal Serial Bus (USB) Type-A and Type-C ports, High-Definition Multimedia Interface (HDMI) ports, Bluetooth, Ethernet, wireless Ethernet) may be coupled to one or more input/output and/or accessory devices. Such input/output and accessory devices can include a controller 650 such as a DualSense^{®}, DualShock^{®}, or Access^{™} controllers for PlayStation^{®} devices, a virtual reality (VR) or augmented reality (AR) headset 652 such as the PS VR2 headset, accessory controllers 654 such as PS VR2 Sense^{™} a handheld gaming device 656 such as PlayStation Portal^{®}, a camera 658, and/or an earphone/headphone set 660 such as the PULSE Elite^{™} headset or the Pulse Explore^{™} earbuds. In some implementations, the computing device 600 includes one or more acoustic transducers, and/or is connected to one or more external acoustic transducers such as one or more speakers associated with the display 616.

The computing device 600 may be implemented in a number of different forms, as shown in the FIG. 6. For example, the computing device 600 may be implemented as a gaming console 620, or as one or more servers 624 or as a rack within a server. In some implementations, the computing device 600 may be implemented as a personal computer such as a laptop computer 622. In some implementations, the computing device 600 can be implemented as a mobile device such as the connected handheld gaming device 656. In some implementations, a computing device can include one or more of the computing device 600, and an entire system may be made up of multiple computing devices communicating with each other. For example, a gaming system can include one or more of a gaming console 620, one or more accessories, and a remote platform such as a cloud-based platform implemented on one or more servers 624.

The processor 602 can be implemented as a chipset of chips that include separate and multiple analog and digital processors. For example, the processor 602 can be a multi-core processor that supports high-speed processing and enables complex computational tasks, real-time physics simulations, and advanced artificial intelligence (AI) capabilities. In one example, the processor 602 includes at least 8 cores, at least 16 threads, and operates at variable frequencies around 3.5 GHz or more. In some implementations, the processor 602 may be a Complex Instruction Set Computers (CISC) processor, a Reduced Instruction Set Computer (RISC) processor, or a Minimal Instruction Set Computer (MISC) processor.

In some implementations, the GPU 603 includes a custom GPU that supports an advanced architecture such as the RDNA 2 architecture developed by AMD. In one example, the GPU 603 includes at least 36 compute units running at speeds of 2 GHz or more, and delivers performance of at least 10 teraflops. The GPU 603 can be configured to support high quality graphics rendering. For example, the GPU 603 can be configured to support hardware-accelerated ray tracing for enhanced realism in lighting and reflections, thereby providing a highly immersive gaming experience.

The computing device can be configured to interact with one or more connected input/output or accessory device in providing the gaming experience. In some implementations, the computing device communicates with a handheld controller 650-e.g., a DualSense^{®}, DualShock^{®}, or Access^{™} controller for PlayStation^{®} devices-to provide the gaming experience. In some implementations, the controller 650 features a high-fidelity haptic feedback system with one or more actuators that simulate a wide range of tactile sensations. In some implementations the controller 650 includes one or more adaptive triggers that adjust resistance based on in-game actions to provide for a realistic feel. The ergonomic design of the controller 650 can be configured to allow for comfortable use even in long gaming sessions. For example, the controller 650 can include textured grips and an optimized button layout. In some implementations, the controller 650 includes one or more of: integrated motion sensors, a high-resolution touchpad, and a built-in microphone array. The controller 650 includes an array of buttons, joysticks, and other controls that allow a user to interact with the computing device 600 to participate in interactive gameplay presented, for example, on a display device such as the display 616. The controller 650 can be powered by one or more regular or rechargeable batteries and supports both wireless and wired connectivity with the computing device 600, for example, via Bluetooth, WiFi, USB-C etc., or via a proprietary connection such as PlayStation Link^{™}. In some implementations, the controller 650 includes a light bar and player indicators for visual feedback and customization.

In some implementations, the input/output or accessory device includes a VR/AR headset 652. One example of such a headset is the PlayStation VR2 (PS VR2) headset that is configured to provide an immersive and interactive gaming experience. In some implementations, the headset 652 features dual organic light emitting device (OLED) displays with a combined resolution of 4000 x 2080 pixels-thus providing sharp visuals and a wide field of view. In some implementations, the VR/AR headset 652 includes advanced eye-tracking technology that enables foveated rendering, optimizing performance by focusing on where the user is looking. In some implementations, the headset 652 includes integrated cameras that facilitate tracking head movements without external sensors. In some implementations, the headset includes haptic feedback for tactile sensations and/or one or more acoustic transducers configured to provide a spatial sound effect the user. The headset 652 can include an adjustable headband and cushioned padding, and can be configured to connect to the computing device 600 either over a wireless network (e.g., over a WiFi^{®} or Bluetooth^{®} connection, or a proprietary connection such as PlayStation Link^{™}) or over a wire such as a USB-C cable.

In some implementations, the headset 652 can be configured to work in conjunction with one or more accessory controllers 654 such as the PlayStation VR2 Sense^{™} controllers. The accessory controllers 654 can be configured to enhance the immersive gaming experience through various features such as advanced haptic feedback for detailed in-game sensations, adaptive triggers with dynamic resistance to simulate real-world actions, and finger touch detection for natural interactions. The ergonomics of the accessory controllers 654 can be configured to provide a comfortable experience even during extended gameplay. In some implementations, the accessory controllers include one or more integrated sensors (accelerometer, gyroscope, etc.) and cameras to provide motion tracking. The accessory controllers 654 can be configured to connect to the computing device 600 and/or the headset 652 over a wireless connection such as WiFi^{®} or Bluetooth^{®}.

In some implementations, the computing device 600 can be connected to a handheld gaming device 656 such as the PlayStation Portal^{®}. The handheld gaming device 656 can be configured to stream games and media from the computing device 600 via a wireless connection such as WiFi^{®} or Bluetooth^{®}. The handheld gaming device 656 includes a high-resolution screen that allows users to play games and/or stream media remotely without using the display 616 connected to the computing device 600. This allows the display to be used for other purposes while the computing device 600 facilitates gameplay on the handheld gaming device 656. In some implementations, the handheld gaming device 656 is configured to act as a streaming receiver without running games natively on the device 656 itself. This makes the handheld gaming device 656 a convenient option for playing games run on the computing device 600, while leaving a TV connected to the computing device 600 free to be used for viewing other media. The handheld gaming device 656 can includes buttons and features similar to (or even same as) the controller 650, thus providing for a similar gaming experience as that with the controller 650.

In some implementations, the input/output or accessory devices can include a camera 658 and/or an earphone/headphone set 660 such as the PULSE Elite^{™} headset or the Pulse Explore^{™} earbuds. The camera 658 can be used to track user-movements, which in turn can be used as an input to an interactive game being executed on the computing device 600. The earphone/headphone set 660 can be used to provide audio feedback/output to a user from the computing device 600. In some implementations, the earphone/headphone set 660 can include a microphone configured to receive spoken inputs/instructions that in turn can be used to control an interactive game being executed on the computing device 600.

While this specification contains many specific implementation details, these should not be construed as limitations on the scope of what is being claimed, which is defined by the claims themselves, but rather as descriptions of features that may be specific to particular embodiments. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially be claimed as such, one or more features from a claimed combination can in some cases be excised from the combination, and the claim may be directed to a subcombination or variation of a subcombination.

Similarly, while operations are depicted in the drawings and recited in the claims in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing may be advantageous.

## Claims

1. A method, comprising:
obtaining, by one or more processors, a rendered image frame including a plurality of pixels and a set of geometric data stored in a buffer, the set of geometric data including geometric data associated with the plurality of pixels in the rendered image frame;
identifying, by one or more processors, a plurality of patches in the rendered image frame, each patch of the plurality of patches including pixels from the plurality of pixels and corresponding to a primitive identified in the set of geometric data;
generating, by one or more processors, a plurality of tokens associated with the plurality of patches based on a set of feature vectors of pixels in each patch; and
generating, by one or more processors, a processed rendered image frame based on at least one of the plurality of tokens provided to a transformer.

2. The method of claim 1, wherein the set of per-pixel feature vectors for each patch of the plurality of patches includes per-pixel features associated with pixels in the patch and includes at least one of color data, depth data, or normal vector data.

3. The method of claim 1, wherein generating the processed rendered image frame includes combining positional information associated with the plurality of patches with the plurality of tokens.

4. The method of claim 1, wherein at least two patches of the plurality of patches are of non-linear shapes.

5. The method of claim 1, wherein geometric data associated with each pixel includes at least one of a primitive identifier value, a normal vector value, or an albedo value, and wherein primitive identifier values for each pixel in a patch are same.

6. The method of claim 1, wherein a first number of pixels in a first patch of the plurality of patches is unequal to a second number of pixels in a second patch of the plurality of patches.

7. The method of claim 1, wherein a number of the plurality of patches exceeds a number of token inputs of the transformer, the method further comprising:
merging, by one or more processors, a first set of patches associated with a first set of low-ranked primitives in the rendered image frame into a second set of patches, wherein a total number of patches, including the number of patches in the second set of patches, is equal to the number of token inputs of the transformer; and
generating, by one or more processors, a reduced set of tokens based on the second set of patches, wherein the reduced set of tokens are the plurality of tokens.

8. The method of claim 1, wherein a number of the plurality of patches is less than a number of token inputs of the transformer, the method further comprising:
padding or masking, by one or more processors, unused token inputs of the transformer.

9. The method of claim 1, wherein noise content of the processed rendered image frame is less than noise content of the rendered image frame.

10. The method of claim 1, wherein a resolution of the processed rendered image frame is higher than a resolution of the rendered image frame.

11. A system, comprising:
one or more processors; and
one or more storage devices storing instructions that are executable by the one or more processors to cause performance of operations, comprising:
obtaining, by one or more processors, a rendered image frame including a plurality of pixels and a set of geometric data stored in a buffer, the set of geometric data including geometric data associated with the plurality of pixels in the rendered image frame,
identifying, by one or more processors, a plurality of patches in the rendered image frame, each patch of the plurality of patches including pixels from the plurality of pixels and corresponding to a primitive identified in the set of geometric data,
generating, by one or more processors, a plurality of tokens associated with the plurality of patches based on a set of feature vectors of pixels in each patch, and
generating, by one or more processors, a processed rendered image frame based on at least one of the plurality of tokens provided to a transformer.

12. The system of claim 11, wherein the set of per-pixel feature vectors for each patch of the plurality of patches includes per-pixel features associated with pixels in the patch and includes at least one of color data, depth data, or normal vector data.

13. The system of claim 11, wherein generating the processed rendered image frame includes combining positional information associated with the plurality of patches with the plurality of tokens.

14. The system of claim 11, wherein at least two patches of the plurality of patches are of non-linear shapes.

15. The system of claim 11, wherein geometric data associated with each pixel includes at least one of a primitive identifier value, a normal vector value, or an albedo value, and wherein primitive identifier values for each pixel in a patch are same.

16. The system of claim 11, wherein a first number of pixels in a first patch of the plurality of patches is unequal to a second number of pixels in a second patch of the plurality of patches.

17. The system of claim 11, wherein a number of the plurality of patches exceeds a number of token inputs of the transformer, the operations further comprising:
merging, by one or more processors, a first set of patches associated with a first set of low-ranked primitives in the rendered image frame into a second set of patches, wherein a total number of patches, including the number of patches in the second set of patches, is equal to the number of token inputs of the transformer, and
generating, by one or more processors, a reduced set of tokens based on the second set of patches, wherein the reduced set of tokens are the plurality of tokens.

18. The system of claim 11, wherein a number of the plurality of patches is less than a number of token inputs of the transformer, the operations further comprising:
padding or masking, by one or more processors, unused token inputs of the transformer.

19. The system of claim 11, wherein noise content of the processed rendered image frame is less than noise content of the rendered image frame.

20. The system of claim 11, wherein a resolution of the processed rendered image frame is higher than a resolution of the rendered image frame.

21. A non-transitory machine-readable storage medium storing instructions being executable by one or more processors to cause performance of operations comprising:
obtaining, by one or more processors, a rendered image frame including a plurality of pixels and a set of geometric data stored in a buffer, the set of geometric data including geometric data associated with the plurality of pixels in the rendered image frame;
identifying, by one or more processors, a plurality of patches in the rendered image frame, each patch of the plurality of patches including pixels from the plurality of pixels and corresponding to a primitive identified in the set of geometric data;
generating, by one or more processors, a plurality of tokens associated with the plurality of patches based on a set of feature vectors of pixels in each patch; and
generating, by one or more processors, a processed rendered image frame based on at least one of the plurality of tokens provided to a transformer.

22. The non-transitory machine-readable storage medium of claim 21, wherein the set of per-pixel feature vectors for each patch of the plurality of patches includes per-pixel features associated with pixels in the patch and includes at least one of color data, depth data, or normal vector data.

23. The non-transitory machine-readable storage medium of claim 21, wherein generating the processed rendered image frame includes combining positional information associated with the plurality of patches with the plurality of tokens.

24. The non-transitory machine-readable storage medium of claim 21, wherein at least two patches of the plurality of patches are of non-linear shapes.

25. The non-transitory machine-readable storage medium of claim 21, wherein geometric data associated with each pixel includes at least one of a primitive identifier value, a normal vector value, or an albedo value, and wherein primitive identifier values for each pixel in a patch are same.

26. The non-transitory machine-readable storage medium of claim 21, wherein a first number of pixels in a first patch of the plurality of patches is unequal to a second number of pixels in a second patch of the plurality of patches.

27. The non-transitory machine-readable storage medium of claim 21, wherein a number of the plurality of patches exceeds a number of token inputs of the transformer, the operations further comprising:
merging, by one or more processors, a first set of patches associated with a first set of low-ranked primitives in the rendered image frame into a second set of patches, wherein a total number of patches, including the number of patches in the second set of patches, is equal to the number of token inputs of the transformer; and
generating, by one or more processors, a reduced set of tokens based on the second set of patches, wherein the reduced set of tokens are the plurality of tokens.

28. The non-transitory machine-readable storage medium of claim 21, wherein a number of the plurality of patches is less than a number of token inputs of the transformer, the operations further comprising:
padding or masking, by one or more processors, unused token inputs of the transformer.

29. The non-transitory machine-readable storage medium of claim 21, wherein noise content of the processed rendered image frame is less than noise content of the rendered image frame.

30. The non-transitory machine-readable storage medium of claim 21, wherein a resolution of the processed rendered image frame is higher than a resolution of the rendered image frame.
